# EUROPEAN PATENT APPLICATION

(11) **EP 3 101 055 A1**
(43) Date of publication of application: **07.12.2016**
(21) Application number: 14881045.0
(22) Date of filing: 18.12.2014
(51) Int. Cl.: C08J 3/20, C08K 5/053, C08L 67/04

(54) **METHOD FOR MANUFACTURING POLYESTER RESIN COMPOSITION AND POLYESTER RESIN MOLDING**

(30) Priority: 30.01.2014 JP 2014015899
(71) Applicant: Kaneka Corporation, Osaka-shi, Osaka 530-8288 (JP)
(72) Inventor: MINAMI, Tetsuya, Osaka 566-0072 (JP); KOYAMA, Ryohei, Osaka 566-0072 (JP); SUZUKI, Noriyuki, Osaka 566-0072 (JP)
(74) Representative: Vossius & Partner Patentanwälte Rechtsanwälte mbB
(86) International application number: PCT/JP2014/006325
(87) International publication number: WO 2015/114719

(57) **Abstract**

It is an object to provide a method of producing a polyester resin composition with improved crystallization, the polyester resin composition making it possible to produce a molded article with reduced appearance defects, such as fish eyes. With the method, a polyester resin composition containing a polyester resin and pentaerythritol is produced, and the method of producing the polyester resin composition includes a step of mixing the polyester resin and the pentaerythritol together in the presence of water.

## Description

### Technical Field

The present invention relates to a method of producing a resin composition for molding and to a polyester resin molded article.

### Background Art

In recent years, biodegradable plastics have been actively developed as materials that can solve the problem of plastic wastes, i.e., the problem that plastic wastes cause a heavy burden on the global environment, such as harmful effects on the ecosystem, generation of harmful gas during combustion of the plastic wastes, and global warming due to a large amount of heat generated by combustion of the plastic wastes.

In particular, carbon dioxide generated by combustion of plant-derived biodegradable plastics is originally present in the air. Therefore, combustion of plant-derived biodegradable plastics does not increase the amount of carbon dioxide in the atmosphere. This is called "carbon neutral", and is regarded as important under the Kyoto Protocol, which sets targets for reducing carbon dioxide emissions. Therefore, active use of plant-derived biodegradable plastics is desired.

Recently, from the viewpoints of biodegradability and carbon neutral, aliphatic polyester resins have received attention as plant-derived plastics. In particular, polyhydroxyalkanoate (hereinafter, occasionally referred to as PHA) resins have received attention. Among PHA resins, poly(3-hydroxybutyrate) homopolymer resins (hereinafter, occasionally referred to as P3HB), poly(3-hydroxybutyrate-co-3-hydroxyvalerate) copolymer resins (hereinafter, occasionally referred to as P3HB3HV), poly(3-hydroxybutyrate-co-3-hydroxyhexanoate) copolymer resins (hereinafter, occasionally referred to as P3HB3HH), poly(3-hydroxybutyrate-co-4-hydroxybutyrate) copolymer resins (hereinafter, occasionally referred to as P3HB4HB), polylactic acid (hereinafter, occasionally referred to as PLA), etc., have received attention.

However, it is known that aliphatic polyester resins, such as the aforementioned PHA resins, are slow in crystallization. Therefore, aliphatic polyester resins require a long cooling time for solidification after being heat-melted in mold processing. This causes problems, such as poor mold processability and productivity.

In this respect, conventionally, blending of a PHA resin with an additive agent serving as a crystal nucleating agent, such as boron nitride, titanium oxide, talc, sugar alcohol, polyvinyl alcohol, chitin, or chitosan, has been proposed in order to improve crystallization of the PHA resins (see Patent Literature 1, for example).

### Citation List

### Patent Literature

PTL 1: International Publication No. WO 2008/099586

### Summary of Invention

### Technical Problem

However, crystal nucleating agents having a substantially high effect on polyester resins have not yet been found at present.

In view of the above, it is an object to provide a method of producing a polyester resin composition with improved crystallization, the polyester resin composition making it possible to produce a molded article with reduced appearance defects, such as fish eyes.

### Solution to Problem

A first aspect of the present invention is a method of producing a polyester resin composition containing a polyester resin and pentaerythritol, the method including a step of mixing the polyester resin and the pentaerythritol together in the presence of water.

Preferably, the method includes a step of mixing the polyester resin and the pentaerythritol together in a state where the water is added thereto.

Preferably, the method includes steps of: mixing the polyester resin and the pentaerythritol together; and adding the water to the polyester resin and the pentaerythritol.

Preferably, a step of mixing the polyester resin and the pentaerythritol together, a step of adding the water to the polyester resin and the pentaerythritol, and a step of mixing the polyester resin and the pentaerythritol together in a state where the water is added thereto are sequentially performed.

Preferably, the method includes a step of removing the water.

Preferably, all the steps are performed during melt-kneading.

Preferably, the polyester resin and the water are mixed together in a ratio of 1 to 100 parts by weight of the water to 100 parts by weight of the polyester resin.

Preferably, the polyester resin and the pentaerythritol are mixed together in a ratio of 0.05 to 20 parts by weight of the pentaerythritol to 100 parts by weight of the polyester resin.

Preferably, the polyester resin is polyhydroxyalkanoate.

Preferably, the polyhydroxyalkanoate contains a repeating unit represented by the following general formula (1): [-CHR-CH₂-CO-O-] (1) (wherein R is an alkyl group represented by CₙH₂ₙ₊₁ and n is an integer of not less than 1 and not more than 15).

Preferably, the polyhydroxyalkanoate is at least one selected from
poly(3-hydroxybutyrate), poly(3-hydroxybutyrate-co-3-hydroxyvalerate),
poly(3-hydroxybutyrate-co-3-hydroxyvalerate-co-3-hydroxyhexanoate),
poly(3-hydroxybutyrate-co-3-hydroxyhexanoate), and
poly(3-hydroxybutyrate-co-4-hydroxybutyrate).

A second aspect of the present invention is a polyester resin molded article produced by the above-described method of producing a polyester resin composition.

### Advantageous Effects of Invention

According to the present invention, a polyester resin composition with improved crystallization can be obtained, the polyester resin composition making it possible to produce a molded article with reduced appearance defects, such as fish eyes.

### Brief Description of Drawings

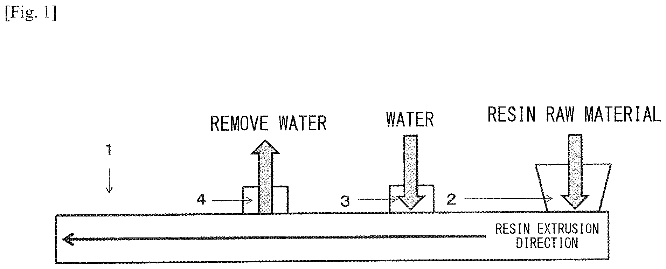

Fig. 1 is a schematic diagram showing one example of a production method according to the present invention.

### Description of Embodiments

The inventors of the present invention have found that pentaerythritol serves highly effectively as a crystal nucleating agent for polyester resins.

Moreover, although a molded article made of a polyester resin and pentaerythritol can be produced by any of various forming methods, such as injection molding, blow molding, and sheet forming, in accordance with the intended use of the molded article, the inventors of the present invention have found that, depending on the particle diameter of pentaerythritol used as a raw material and mixing conditions of the pentaerythritol when a polyester resin composition is produced, there are cases where the pentaerythritol is not favorably dispersed in the polyester resin, which will cause problems, for example, the occurrence of fish eyes in the external appearance of the molded article made of the polyester resin composition. Based on these findings, the inventors have arrived at the present invention.

Hereinafter, the present invention is described in more detail.

A method of producing a polyester resin composition according to the present invention is a production method including a step of mixing a polyester resin and pentaerythritol together in the presence of water.

### <Polyester Resin>

In the production method according to the present invention, an aliphatic polyester resin, such as PHA, polyethylene succinate, polybutylene succinate, polybutylene succinate adipate, polyethylene sebacate, polybutylene sebacate, polyhexamethylene sebacate, polylactic acid, or polybutylene adipate terephthalate, can be preferably used as the polyester resin. Among these aliphatic polyester resins, PHA is particularly preferable.

In order to obtain the effect of pentaerythritol to a higher degree, it is particularly preferable that the polyester resin used in the present invention be a polyester containing a repeating unit represented by the following formula (1): [-CHR-CH₂-CO-O-] (wherein R is an alkyl group represented by CₙH₂ₙ₊₁ and n is an integer of not less than 1 and not more than 15).

The polyester resin is preferably a polymer resin containing 80 mol% or more of 3-hydroxybutyrate, and more preferably a polymer resin containing 85 mol% or more of 3-hydroxybutyrate. The polyester resin is preferably produced by a microorganism. Specific examples of the polyester resin include poly(3-hydroxybutyrate),
poly(3-hydroxybutyrate-co-3-hydroxypropionate),
poly(3-hydroxybutyrate-co-3-hydroxyvalerate),
poly(3-hydroxybutyrate-co-3-hydroxyvalerate-3-hydroxyhexanoate),
poly(3-hydroxybutyrate-co-3-hydroxyhexanoate),
poly(3-hydroxybutyrate-co-3-hydroxyheptanoate),
poly(3-hydroxybutyrate-co-3-hydroxyoctanoate),
poly(3-hydroxybutyrate-co-3-hydroxynonanoate),
poly(3-hydroxybutyrate-co-3-hydroxydecanoate),
poly(3-hydroxybutyrate-co-3-hydroxyundecanoate), and
poly(3-hydroxybutyrate-co-4-hydroxybutyrate). In particular, from the viewpoints of mold processability and the physical properties of the molded article, poly(3-hydroxybutyrate), poly(3-hydroxybutyrate-co-3-hydroxyvalerate),
poly(3-hydroxybutyrate-co-3-hydroxyvalerate-3-hydroxyhexanoate),
poly(3-hydroxybutyrate-co-3-hydroxyhexanoate), or
poly(3-hydroxybutyrate-co-4-hydroxybutyrate) is suitable for use as the polyester resin.

From the viewpoints of mold processability, the quality of the molded article, etc., the composition ratio of 3-hydroxybutyrate (hereinafter, occasionally referred to as 3HB) to a comonomer copolymerized therewith (e.g., 3-hydroxyvalerate (hereinafter, occasionally referred to as 3HV), 3-hydroxyhexanoate (hereinafter, occasionally referred to as 3HH), or 4-hydroxybutyrate (hereinafter, occasionally referred to as 4HB)) in the polyester resin, that is, the ratio of monomers in a copolymer resin, is preferably 3-hydroxybutyrate/comonomer = 97/3 to 80/20 (mol%/mol%), and more preferably 95/5 to 85/15 (mol%/mol%). If the comonomer ratio is less than 3 mol%, there is a case where a mold processing temperature and a pyrolysis temperature are close to each other, which makes the mold processing difficult to perform. If the comonomer ratio exceeds 20 mol%, there is a case where the polyester resin is slowly crystallized, which results in poor productivity.

The ratio of each monomer in the copolymer resin as the polyester resin can be measured by gas chromatography in a manner described below. In a vessel, 2 ml of a sulfuric acid/methanol mixed liquid (15/85 (weight ratio)) and 2 ml of chloroform are added to about 20 mg of the dry polyester resin, and the vessel is tightly sealed. Then, the resulting mixture is heated at 100 °C for 140 minutes to obtain a methyl ester of polyester resin degradation product. After cooling the mixture, 1.5 g of sodium hydrogen carbonate is added thereto little by little for neutralization, and the resulting mixture is left as it is until generation of carbon dioxide gas stops. The mixture is well mixed with 4 ml of diisopropyl ether added thereto, and then the monomer unit composition of the polyester resin degradation product in a supernatant is analyzed by capillary gas chromatography to determine the ratio of each monomer in the copolymer resin.

The gas chromatography is performed by using "GC-17A" manufactured by Shimadzu Corporation as a gas chromatograph and "NEUTRA BOND-1" (with a column length of 25 m, a column inner diameter of 0.25 mm, and a liquid film thickness of 0.4 µm) manufactured by GL Sciences Inc. as a capillary column. He gas is used as a carrier gas; the column inlet pressure is set to 100 kPa; and a sample is injected in an amount of 1 µl. Temperature conditions are as follows: the temperature is increased from an initial temperature of 100 °C to 200 °C at a rate of 8 °C/min, and is further increased from 200 °C to 290 °C at a rate of 30 °C/min.

In the present invention, the weight-average molecular weight (hereinafter, occasionally referred to as Mw) of the polyester resin is preferably 200,000 to 2,500,000, more preferably 250,000 to 2,000,000, and even more preferably 300,000 to 1,000,000. If the weight-average molecular weight is less than 200,000, there is a case where mechanical properties are poor. If the weight-average molecular weight exceeds 2,500,000, there is a case where mold processing is difficult.

The weight-average molecular weight can be measured by using a gel permeation chromatograph ("Shodex GPC-101" manufactured by Showa Denko K. K.), a polystyrene gel column ("Shodex K-804" manufactured by Showa Denko K. K.), and chloroform as a mobile phase, and can be determined as a molecular weight based on a polystyrene calibration curve. In this case, the calibration curve is prepared by using polystyrene standards having weight-average molecular weights of 31,400, 197,000, 668,000, and 1,920,000.

It should be noted that the polyester resin is produced by a microorganism, such as Alcaligenes eutrophus AC32 strain produced by introducing a polyester resin synthetic enzyme gene derived from Aeromonas caviae into Alcaligenes eutrophus (International Deposit under the Budapest Treaty, International Depository Authority: International Patent Organism Depositary, National Institute of Advanced Industrial Science and Technology (6 Chuo, 1-1-1, Higashi, Tsukuba, Ibaraki, Japan), Date of Original Deposit: Aug. 12, 1996, transferred on Aug. 7, 1337, Deposit Number: FERM BP-6038 (transferred from original deposit FERM P-15786)) (J. Bacteriol., 179,4821 (1997)).

### <Pentaerythritol>

In the method of producing a polyester resin composition according to the present invention, for example, pentaerythritol is mixed as a crystal nucleating agent into the polyester resin by a melt-kneading method or the like.

Pentaerythritol is a compound represented by a formula (2) below.

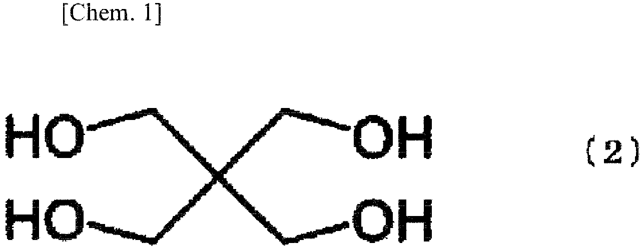

Pentaerythritol is one of polyhydric alcohols and is an organic compound in a white crystal form with a melting point of 260.5 °C. Pentaerythritol is classified as a sugar alcohol, but is not derived from a natural product and can be synthesized by condensation of acetaldehyde and formaldehyde in a basic condition.

The pentaerythritol used in the present invention is not particularly limited, so long as it is commonly available, for example, a reagent or an industrial product. Examples of the reagent include, but are not limited to, those manufactured by Wako Pure Chemical Industries, Ltd., Sigma-Aldrich, Tokyo Chemical Industry Co., Ltd., and Merck. Examples of the industrial product include, but are not limited to, those manufactured by Koei Chemical Co., Ltd. (trade name: Pentarit), Nippon Synthetic Chemical Industry Co., Ltd. (trade name: Neulizer P), and Toyo Chemicals Co., Ltd.

Some of such commonly-available reagents and industrial products contain, as an impurity, an oligomer produced by dehydration condensation of pentaerythritol, such as dipentaerythritol or tripentaerythritol. The oligomer does not have the effect of crystallizing the polyester resin, but does not inhibit the crystallization effect of the pentaerythritol. Therefore, the oligomer may be contained in the pentaerythritol used in the present invention.

The compounding ratio of the pentaerythritol in the method of producing a polyester resin composition according to the present invention is such that, in order to obtain the effect of the pentaerythritol as a crystal nucleating agent, the lower limit value of the compounding ratio of the pentaerythritol is preferably 0.05 parts by weight, more preferably 0.1 parts by weight, and even more preferably 0.5 parts by weight with respect to 100 parts by weight of the polyester resin. If the amount of the pentaerythritol is excessively large, there is a case where the viscosity of the polyester resin composition during melt processing is reduced, which makes it difficult to process the polyester resin composition. Therefore, the upper limit value of the compounding ratio of the pentaerythritol is preferably 20 parts by weight, more preferably 15 parts by weight, and even more preferably 10 parts by weight with respect to 100 parts by weight of the total amount of resin contained in the resin composition for molding.

### <Water>

Water used in the production method according to the present invention is not particularly limited, so long as the water makes uniform dispersion of the pentaerythritol possible. For example, RO water (water purified by reverse osmosis membrane technique), or pure water or ultrapure water such as distilled water or deionized water (water purified by ion exchange resin), can be used. In order to suppress nozzle clogging due to water scale or the like, pure water and ultrapure water are particularly preferable.

The adding amount of the water used in the production method according to the present invention is preferably 1 to 100 parts by weight, more preferably 3 to 50 parts by weight, and even more preferably 5 to 30 parts by weight with respect to 100 parts by weight of the polyester resin. If the adding amount of the water is less than 1 part by weight, there is a case where the pentaerythritol cannot be finely dispersed in the polyester resin. If the adding amount of the water exceeds 100 parts by weight, there is a case where the water remains in the polyester resin composition.

A certain amount of pentaerythritol may be dissolved, in advance, in the water used in the production method according to the present invention, and the water in which the pentaerythritol is dissolved may be used as an aqueous pentaerythritol solution. In this case, the aqueous solution may be heated in order to increase the solubility of the pentaerythritol.

In the production method according to the present invention, in order to increase compatibility with the polyester resin and pentaerythritol, a liquid different from water may be added within such a range that advantageous effects of the present invention will not be lost.

In the present invention, as the liquid different from water, a compound having high affinity for water, such as an alcohol, acetone, or tetrahydrofuran, may be used in combination with water. The ratio of such a liquid to the water may be not more than 20 %, preferably not more than 15 %, more preferably not more than 10 %, and particularly preferably not more than 5 %. If the ratio exceeds 20 %, there is a case where advantageous effects of the present invention cannot be obtained.

In the present invention, the liquid different from water may be added separately from water, or alternatively, the liquid may be mixed with water in advance, and then the mixture may be added.

### <Method of Producing Polyester Resin Composition>

Hereinafter, one non-limiting example of the method of producing a polyester resin composition according to the present invention is described.

The method of producing a polyester resin composition according to the present invention includes a step of mixing a polyester resin and pentaerythritol together in the presence of water. This step allows the pentaerythritol, to be finely and uniformly dispersed in the polyester resin. As a result, a mold processability improving effect owing to the addition of the pentaerythritol can be achieved efficiently. The order in which the polyester resin, pentaerythritol, and water are mixed is not particularly limited. A conceivable order is, for example, an order in which the polyester resin and pentaerythritol are mixed together, and then water is added thereto and mixed therewith, or an order in which the pentaerythritol or polyester resin is mixed into water, and then the remaining pentaerythritol or polyester resin is added thereto. In order to obtain high dispersibility and high work effciency, it is preferable to mix the polyester resin and pentaerythritol together and then add water thereto. That is, preferably, the method of producing a polyester resin composition according to the present invention includes a step of mixing the polyester resin and pentaerythritol together and a step of adding water thereto. More preferably, the method includes a step of mixing the polyester resin and pentaerythritol together in a state where the water is added thereto.

Preferably, in the method of producing a polyester resin composition according to the present invention, the step of mixing the polyester resin and pentaerythritol together, the step of adding water thereto, and the step of mixing the polyester resin and pentaerythritol together in a state where the water is added thereto are performed sequentially from the viewpoints of, for example, increasing work efficiency and suppressing a reduction in the amount of water due to evaporation during the mixing.

A mixing method adopted in the step of mixing the polyester resin and pentaerythritol together in the presence of water in the method of producing a polyester resin composition according to the present invention (hereinafter, this step is occasionally referred to as a mixing step) is not particularly limited, so long as the polyester resin and pentaerythritol can be uniformly mixed together. However, a melt-kneading method is particularly preferable since high dispersibility of the pentaerythritol can be readily obtained with this method.

A known melt-kneader, such as an extruder, a roll mill, or a Banbury mixer, can be used as an apparatus capable of uniform mixing. Specifically, a method in which the polyester resin, pentaerythritol, and water are melt-kneaded by a twin screw extruder to make pellets can be adopted. The polyester resin, pentaerythritol, and water may be fed into the apparatus such as a twin screw extruder at the same time. Alternatively, the polyester resin may be melted in the apparatus first. Thereafter, pentaerythritol may be fed into the apparatus, and then water may be fed into the apparatus to perform melt-kneading. Further alternatively, the polyester resin and pentaerythritol may be fed into the apparatus, and melt-kneading may be performed first. Thereafter, water may be fed into the apparatus, and melt-kneading may be further performed. For the reason that the steps are simple and, for example, can be readily automated, the following method is preferable: feeding the polyester resin and pentaerythritol into the apparatus; performing melt-kneading with the apparatus; thereafter feeding water into the apparatus; and further performing melt-kneading with the apparatus.

In the production method according to the present invention, the water may be fed into the twin screw extruder either in an open system or in a closed system. Preferably, the water is fed into the twin screw extruder in a closed system in order to suppress rapid evaporation of the water.

In the production method according to the present invention, the water may be fed not only from a single position but also from a plurality of positions, such as two or three positions. Preferably, the water is fed from a single position in order to simplify the apparatus.

The production method according to the present invention may further include a step of removing water (hereinafter, occasionally referred to as a vent step) after the step of mixing the polyester resin and pentaerythritol together in the presence of water. The vent step may be performed either during the melt-kneading or after the melt-kneading. Preferably, the vent step is performed during the melt-kneading, because by performing the vent step during the melt-kneading, advantages including the following can be obtained: hydrolysis of the polyester resin is suppressed; high dispersibility of pentaerythritol is obtained; and heating after the pellet making is unnecessary. It should be noted that "during the melt-kneading" means during the polyester resin being kneaded at its melting temperature.

In the production method according to the present invention, in the vent step, water may be removed not only from a single position but also from a plurality of positions, such as two or three positions. Preferably, water is removed from a single position in order to simplify the apparatus.

In the vent step, water that has transformed into steam may be removed by releasing it into the atmosphere in a state where the upper part of the extruder's cylinder is partly opened. However, preferably, a method of removing the water in a vacuum state by using a vacuum pump or the like is adopted.

Fig. 1 schematically shows one example of the method of producing a polyester resin composition according to the present invention.

The polyester resin and pentaerythritol, which are raw materials, arc fed through a hopper 2 into a twin screw extruder 1. The fed raw materials are moved in an extrusion direction while being melt-kneaded in the twin screw extruder 1. Next, water is added through a water-injection valve 3, and the polyester resin and pentaerythritol are mixed together in the presence of the water. After the water is removed through a vent 4, a strand-shaped resin composition is discharged from the head of the twin screw extruder.

In the production method according to the present invention, a heating temperature in the mixing step is preferably in the range of 100 to 180 °C, more particularly preferably in the range of 120 to 170 °C, and even more particularly preferably in the range of 130 to 160 °C. If the heating temperature is less than 100 °C, there is a case where water remains in the polyester resin composition. If the heating temperature exceeds 180 °C, there is a case where the polyester resin is significantly decomposed.

It should be noted that, preferably, the heating temperature is in the above heating temperature range not only in the mixing step, but during the entire melt-kneading process.

Next, a method of producing a polyester resin composition molded article according to the present invention is described.

First, the strand-shaped resin composition discharged from the head of the twin screw extruder as described above is cut to obtain pellets of the polyester resin composition. The obtained pellets are subjected to, for example, injection molding, extrusion forming by an extruder to which a T-die is attached, tubular forming by an extruder to which a circular die is attached, or film forming by blown film extrusion, and then further subjected to stretching as necessary. As a result, the molded article according to the present invention can be obtained.

It should be noted that, for example, a T-die or the like may be attached to the outlet of the melt-kneader, and thereby the molded article can be produced without making the pellets.

In the molded article obtained in the above-described manner, the nucleating agent that improves the crystallization of the resin is favorably dispersed. Therefore, the molded article has reduced appearance defects, such as fish eyes.

The molded article according to the present invention is suitable for use in the fields of agriculture, fishery, forestry, gardening, medicine, sanitary items, food industry, clothing, non-clothing, packaging, automobiles, building materials, etc.

### Examples

Hereinafter, the present invention is specifically described with reference to examples, but the technical scope of the present invention is not limited by these examples.
- Polyester resin A1: A polyester resin obtained in Production Example 1 was used.

### <Production Example 1>

Culture production of the polyester resin was performed by using KNK-005 strain (see U.S. Patent No. 7384766).

The composition of a seed medium was: 1 w/v% Meat-extract, 1 w/v% Bacto-Tryptone, 0.2 w/v% Yeast-extract, 0.9 w/v% Na₂HPO₄•12H₂O, and 0.15 w/v% KH₂PO₄ (pH 6.8).

The composition of a preculture medium was: 1.1 w/v% Na₂HPO₄•12H₂O, 0.19 w/v% KH₂PO₄, 1.29 w/v% (NH₄)₂SO₄, 0.1 w/v% MgSO₄•7H₂O, and 0.5 v/v% trace metal salt solution (prepared by dissolving, in 0.1 N hydrochloric acid, 1.6 w/v% FeCl₃•6H₂O, 1 w/v% CaCl₂•2H₂O, 0.02 w/v% CoCl₂•6H₂O, 0.016 w/v% CuSO₄•5H₂O, and 0.012 w/v% NiCl₂•6H₂O). Palm oil was added at one time as a carbon source at a concentration of 10 g/L.

The composition of a polyester resin production medium was: 0.385 w/v% Na₂HPO₄•12H₂O, 0.067 w/v% KH₂PO₄,0.291 w/v% (NH₄)₂SO₄, 0.1 w/v% MgSO₄•7H₂O, 0.5 v/v% trace metal salt solution (prepared by dissolving, in 0.1 N hydrochloric acid, 1.6 w/v% FeCl₃•6H₂O, 1 w/v% CaCl₂•2H₂O, 0.02 w/v% CoCl₂•6H₂O, 0.016 w/v% CuSO₄•5H₂O, and 0.012 w/v% NiCl₂•6H₂O), and 0.05 w/v% BIOSPUREX 200K (defoaming agent: manufactured by Cognis Japan Ltd.).

First, a glycerol stock (50 µl) of KNK-005 strain was inoculated into the seed medium (10 ml) and seed-cultured for 24 hours. Then, the resulting seed culture was inoculated at 1.0 v/v% into a 3-liter jar fermenter (MDL-300 manufactured by B. E. MARUBISHI Co., Ltd.) containing 1.8 L of the preculture medium. Preculture was performed for 28 hours under operation conditions where a culture temperature was 33 °C, a stirring speed was 500 rpm, and a ventilation volume was 1.8 L/min while pH was controlled to be in the range of 6.7 to 6.8. The pH control was performed by using a 14 % aqueous ammonium hydroxide solution.

Then, the resulting preculture was inoculated at 1.0 v/v% into a 10-liter jar fermenter (MDS-1000 manufactured by B. E. MARUBISHI Co., Ltd.) containing 6 L of the production medium. Culture was performed under operation conditions where a culture temperature was 28 °C, a stirring speed was 400 rpm, and a ventilation volume was 6.0 L/min while pH was controlled to be in the range of 6.7 to 6.8. The pH control was performed by using a 14 % aqueous ammonium hydroxide solution. Palm oil was used as a carbon source. The culture was performed for 64 hours. After the completion of the culture, cells were collected by centrifugal separation, washed with methanol, and lyophilized, and the weight of the dried cells was measured.

One hundred milliliters of chloroform was added to one gram of the obtained dried cells, and the resulting mixture was stirred at room temperature all day and night to extract the polyester resin from the cells. The mixture was filtered to remove the cell residue, and then the resulting filtrate was concentrated by an evaporator until its total volume became 30 ml. Thereafter, 90 ml of hexane was gradually added to the filtrate, and the resulting mixture was left for 1 hour in the state of being gently stirred. The mixture was filtered to separate the deposited polyester resin, and then the polyester resin was vacuum-dried at 50 °C for 3 hours. In this manner, the polyester resin was obtained. The 3HH content of the obtained polyester resin was measured by gas chromatography in the following manner. In a vessel, 2 ml of a sulfuric acid-methanol mixed liquid (15:85) and 2 ml of chloroform were added to 20 mg of the dried polyester resin, and the vessel was tightly sealed. Then, the resulting mixture was heated at 100 °C for 140 minutes to obtain a methyl ester of polyester resin degradation product. After cooling, 1.5 g of sodium hydrogen carbonate was added thereto little by little for neutralization, and the resulting mixture was left as it was until generation of carbon dioxide gas stopped.

The mixture was well mixed with 4 ml of diisopropyl ether added thereto, and then centrifuged. Thereafter, the monomer unit composition of the aliphatic polyester degradation product in a supernatant was analyzed by capillary gas chromatography. The gas chromatography was performed by using GC-17A manufactured by Shimadzu Corporation as a gas chromatograph and NEUTRA BOND-1 (with a column length of 25 m, a column inner diameter of 0.25 mm, and a liquid film thickness of 0.4 µm) manufactured by GL Sciences Inc. as a capillary column. He gas was used as a carrier gas; a column inlet pressure was set to 100 kPa; and a sample was injected in an amount of 1 µl. Temperature conditions were as follows: the temperature was increased from an initial temperature of 100 °C to 200 °C at a rate of 8 °C/min, and was further increased from 200 °C to 290 °C at a rate of 30 °C/min. As a result of the analysis performed under the above conditions, the polyester resin was found to be poly(3-hydroxybutyrate-co-3-hydroxyhexanoate) (P3HB3HH) represented by the chemical formula (1).

The ratio of 3-hydroxybutyralte (3HB) in the polyester resin was 94.4 mol%, and the ratio of 3-hydroxyhexanoate (3HH) in the polyester resin was 5.6 mol%.

After the completion of the culture, P3HB3HH was obtained from the culture solution by the method described in International Publication No. WO 2010/067543. The P3HB3HH had a weight-average molecular weight of 600,000 as measured by GPC.
- Polyester resin A2: A polyester resin obtained in Production Example 2 was used.

### <Production Example 2>

P3HB3HH was obtained in the same manner as in Production Example 1 except that KNK-631 strain was used and palm kernel oil was used as a carbon source. The P3HB3HH had a weight-average molecular weight of 650,000, and the ratios of 3HB and 3HH therein were 88.6 mol% and 11.4 mol%, respectively.
- Polyester resin A3: A polyester resin obtained in Production Example 3 was used.

### <Production Example 3>

By using C. necator H16 strain (ATCC17699) as a production strain, P3HB having a weight-average molecular weight of 850,000 was prepared in accordance with the method described in International Publication No. WO 09/145164.
- Polyester resin A4: EM5400F (poly(3-hydroxybutyrate-co-4-hydroxybutyrate, P3HB4HB) manufactured by Ecomann and having a 3HB ratio of 86 mol%, a 4HB ratio of 14 mol%, and a weight-average molecular weight of 1,050,000 was used.

### <Example 1>

### (Production of Polyester Resin Composition)

The polyester resin A1 and pentaerythritol (Pentarit T manufactured by Koei Chemical Co., Ltd. and having a mean particle diameter of 178 µm) were blended in a blending ratio shown in Table 1 (blending ratios shown in the table presented below are expressed in part(s) by weight) and melt-kneaded by using a co-rotating intermeshing twin screw extruder (TEM-26SS manufactured by TOSHIBA MACHINE CO., LTD.) shown in Fig. 1 and having a vent for dehydration after the addition of water at a setting temperature of 100 to 150 °C (outlet resin temperature of 169 °C) and a screw rotation speed of 100 rpm to obtain a polyester resin composition. The melt-kneading was performed while adding pure water (water treated by ion exchange resin) in an amount shown in Table 1, which was supplied from a liquid adding pump (manufactured by Nikkiso Co., Ltd.) through a water-injection valve attached to a sealed cylinder. It should be noted that the vent step during the melt-kneading was performed in a vacuum state by using a water seal vacuum pump (manufactured by Shinko Seiki Co., Ltd.). The gauge pressure at the time was -0.09 MPa. The temperature of the molten resin discharged from a die was directly measured with a type K thermocouple and defined as a resin temperature. The polyester resin composition was extruded through the die to be a strand, and the strand was cut to obtain pellets. At the time, no foaming was seen in the strand extruded through the die.

Next, the obtained pellets of the polyester resin composition were sufficiently dried at 60 °C. Thereaftrer, by using a single screw extruder (Labo Plastmill of the type "20C200" manufactured by Toyo Seiki Scisaku-Sho, Ltd.) to which a T-die having a width of 150 mm and a lip width of 0.25 mm was attached, the pellets were extruded under the conditions of a molding temperature of 140 to 180 °C and a screw rotation speed of 50 rpm, and taken up by a cooling roll with its temperature adjusted to 55 °C. In this manner, a T-die sheet having a thickness of 50 µm was obtained. The limit take-up speed at the time and the appearance of the obtained T-die sheet were evaluated, and the evaluation results are shown in Table 1.

### (Limit Take-up Speed of T-die Sheet)

The limit take-up speed of the T-die sheet was evaluated as follows. Pellets as a raw material made of the polyester resin composition were extruded under the conditions of a molding temperature of 140 to 180 °C and a screw rotation speed of 30 to 100 rpm by using a single screw extruder (Labo Plastmill of the type "20C200" manufactured by Toyo Seiki Seisaku-Sho, Ltd.) to which a T-die having a width of 150 mm and a lip width of 0.25 mm was attached, and taken up by a cooling roll with its temperature adjusted to 50 to 60 °C. In this manner, a T-die sheet having a thickness of 50 µm was prepared. Here, the fastest possible take-up speed at the time of preparing the T-die sheet having a thickness of 50 µm was defined as a limit take-up speed. The faster the limit take-up speed, the faster the crystallization and the better the mold processability. Evaluation results are shown in Table 1.

### (Appearance Evaluation of T-die Sheet)

The appearance of the T-die sheet was evaluated as follows. Five pieces of T-die sheets made of the polyester resin composition were arbitrarily cut out in a size of 10 cm x 30 cm. The cut-out T-die sheets were laid out on a stand provided with backlight and a glass plate having a thickness of 2 mm, and fish eyes were visually counted for each T-die sheet. The average fish eye count among the five T-die sheets was converted into a value per square meter. When the value was not more than 10 per square meter, it was evaluated as satisfactory. When the value was more than 10 per square meter, it was evaluated as unsatisfactory. FL20S•D manufactured by Panasonic Corporation was used as the backlight. Evaluation results are shown in Table 1.

### <Examples 2 to 4>

T-die sheets made of the polyester resin composition were prepared in the same manner as in Example 1 except that the blending ratio was changed as shown in Table 1. The limit take-up speed at the time of preparing each T-die sheet and the appearance of each T-die sheet were evaluated. Evaluation results are shown in Table 1.

### <Comparative Examples 1 to 4>

T-die sheets made of the polyester resin composition were prepared in the same manner as in Example 1 except that the blending ratio was changed as shown in Table 1. The limit take-up speed at the time of preparing each T-die sheet and the appearance of each T-die sheet were evaluated. Evaluation results are shown in Table 1.

**[Table 1]**

| | | | Examples | | | | Comparative Examples | | | |
|---|---|---|---|---|---|---|---|---|---|---|
| | | | 1 | 2 | 3 | 4 | 1 | 2 | 3 | 4 |
| Raw material | Polyester resin | A1 | 100 | | | | 100 | | | 100 |
| | Polyester resin | A2 | | 100 | | | | 100 | | |
| | Polyester resin | A3 | | | 100 | | | | | |
| | Polyester resin | A4 | | | | 100 | | | 100 | |
| | Pentaerythritol | - | 1 | 2 | 1 | 1.5 | 1 | 2 | 1.5 | |
| Amount of water added | | Part(s) by weight | 10 | 30 | 5 | 15 | 0 | 0 | 0 | 0 |
| Limit sheet take-up speed | | m/min | >10 | 8 | >10 | >10 | >10 | 6 | >10 | 1 |
| Sheet appearance evaluation | | - | Satisfactory | Satisfactory | Satisfactory | Satisfactory | Unsatisfactory | Unsatisfactory | Unsatisfactory | Satisfactory |

As shown in Table 1, in Comparative Examples 1 to 3, since water was not added when the polyester resin and pentaerythritol were melt-kneaded, a large number of fish eyes derived from the pentaerythritol having a large particle diameter were observed. Since Comparative Example 4 contained no pentaerythritol, fish eye derived from pentaerythritol was not observed. However, in Comparative Example 4, the limit take-up speed was low and crystallization was slow.

On the other hand, it was confirmed in Examples 1 to 4 that since water was added when the polyester resin and pentaerythritol were melt-kneaded, the pentaerythritol was made finer, and as a result, even in the case of forming a thin molded article, such as a sheet, the formation of fish eyes was suppressed. It was also confirmed that since Examples 1 to 4 contained pentaerythritol, the limit take-up speed was fast and crystallization was fast.

## Claims

1. A method of producing a polyester resin composition containing a polyester resin and pentaerythritol, the method comprising a step of mixing the polyester resin and the pentaerythritol together in the presence of water.

2. The method of producing a polyester resin composition according to claim 1, comprising a step of mixing the polyester resin and the pentaerythritol together in a state where the water is added thereto.

3. The method of producing a polyester resin composition according to claim 1 or 2, comprising steps of:
mixing the polyester resin and the pentaerythritol together; and
adding the water to the polyester resin and the pentaerythritol.

4. The method of producing a polyester resin composition according to any one of claims 1 to 3, wherein
a step of mixing the polyester resin and the pentaerythritol together, a step of adding the water to the polyester resin and the pentaerythritol, and a step of mixing the polyester resin and the pentaerythritol together in a state where the water is added thereto are sequentially performed.

5. The method of producing a polyester resin composition according to any one of claims 1 to 4, comprising a step of removing the water.

6. The method of producing a polyester resin composition according to any one of claims 1 to 5, wherein
all the steps are performed during melt-kneading.

7. The method of producing a polyester resin composition according to any one of claims 1 to 6, wherein
the polyester resin and the water are mixed together in a ratio of 1 to 100 parts by weight of the water to 100 parts by weight of the polyester resin.

8. The method of producing a polyester resin composition according to any one of claims 1 to 7, wherein
the polyester resin and the pentaerythritol are mixed together in a ratio of 0.05 to 20 parts by weight of the pentaerythritol to 100 parts by weight of the polyester resin.

9. The method of producing a polyester resin composition according to any one of claims 1 to 8, wherein
the polyester resin is polyhydroxyalkanoate.

10. The method of producing a polyester resin composition according to claim 9, wherein
the polyhydroxyalkanoate contains a repeating unit represented by the following general formula (1):
[-CHR-CH₂-CO-O-] (1)
(wherein R is an alkyl group represented by CₙH₂ₙ₊₁ and n is an integer of not less than 1 and not more than 15).

11. The method of producing a polyester resin composition according to claim 9 or 10, wherein
the polyhydroxyalkanoate is at least one selected from poly(3-hydroxybutyrate), poly(3-hydroxybutyrate-co-3-hydroxyvalerate),
poly(3-hydroxybutyrate-co-3-hydroxyvalerate-co-3-hydroxyhexanoate),
poly(3-hydroxybutyrate-co-3-hydroxyhexanoate), and
poly(3-hydroxybutyrate-co-4-hydroxybutyrate).

12. A polyester resin molded article produced by the method of producing a polyester resin composition according to any one of claims 1 to 11.
